# EUROPEAN PATENT APPLICATION

(11) **EP 3 305 079 A1**
(43) Date of publication of application: **11.04.2018**
(21) Application number: 16201808.9
(22) Date of filing: 01.12.2016
(51) Int. Cl.: A21D 8/04, A21D 10/00

(54) **ENZYME COMPOSITION FOR USE IN BAKED PRODUCTS**

(30) Priority: 07.10.2016 US 201662405641 P; 04.11.2016 US 201662417863 P
(71) Applicant: Caravan Ingredients Inc., Lenexa, Kansas 66215 (US)
(72) Inventor: WINGER, Mary Christine, Lenexa, Kansas 66220 (US); FENG, Guohua, Overland, Kansas 66221 (US); YAKUBISIN, Jessica, Olathe, Kansas 66062 (US)
(74) Representative: De Vries & Metman

(57) **Abstract**

Novel enzyme mixtures and doughs containing those mixtures are provided. Those enzyme mixtures include a first lipase and a first xylanase, as well as at least a second lipase different from the first lipase and/or a second xylanase different from the first xylanase. The enzyme mixture preferably further comprises a fungal amylase and/or lecithin. Advantageously, doughs utilizing the inventive enzyme mixture can minimize or even avoid the use of DATEM therein, while achieving properties in the final baked product comparable to those that would be achieved during normal DATEM usage.

## Description

### Field of the Invention

The present invention is broadly concerned with an enzyme composition for use in lieu of diacetyl tartaric acid esters of mono- and diglycerides ("DATEM") in baked products, such as bread.

### Description of the Prior Art

Dough conditioners are commonly used in baked products to improve the properties and handling of the dough, along with the properties of the final baked products. These properties include volume, texture, flavor, freshness, and machinability. Dough conditioners are often typically chemical additives, such as emulsifiers (e.g., DATEM). Consumers are becoming more and more resistant to chemical additives in food. However, it has been difficult to achieve the desired properties without these additives. There is a need for further non-chemical options that can achieve properties similar to that of the currently available chemical additives.

### SUMMARY OF THE INVENTION

The present invention is concerned with an enzyme mixture useful for preparing baked products. The mixture comprises a first xylanase, a first lipase, and an enzyme selected from the group consisting of: a second xylanase different from the first xylanase; a second lipase different from the first lipase; and both the second xylanase and second lipase. The mixture is also substantially free of one or more of the following enzymes: cellulases, glucose oxidases, and trans-glutaminases.

The invention further provides a dough including flour and other dough-making ingredients, the improvement being that the dough further comprises:
a first xylanase;
a first lipase; and
an enzyme selected from the group consisting of a second xylanase different from the first xylanase, a second lipase different from the first lipase, and both the second xylanase and second lipase, wherein the dough is substantially free of one or more of the following enzymes: cellulases, glucose oxidases, and trans-glutaminases.

The invention is further directed towards a method of forming a bakery product. The method comprises providing a dough comprising:
flour;
a first xylanase;
a first lipase; and
an enzyme selected from the group consisting of a second xylanase different from the first xylanase, a second lipase different from the first lipase, and both the second xylanase and second lipase. The dough is also substantially free of one or more of the following enzymes: cellulases, glucose oxidases, and trans-glutaminases. The dough is then baked for a time and temperature sufficient to yield the bakery product.

In a further embodiment, the invention provides a dough including flour and other dough-making ingredients where the improvement is that the dough further comprises a first xylanase, a first lipase, and lecithin.

Additionally the invention provides a method of forming a bakery product where the method comprises providing a dough. The dough comprises flour, a first xylanase, a first lipase, and lecithin. The dough is baked for a time and temperature sufficient to yield the bakery product.

In yet a further embodiment, an enzyme mixture is provided that comprises a first xylanase, a first lipase, and lecithin.

### DETAILED DESCRIPTION OF THE PREFERRED EMBODIMENTS

In more detail, the present invention is concerned with novel enzyme mixtures that can be used to make dough for forming yeast-raised and other bakery products. These products include those selected from the group consisting of breads, pretzels, English muffins, buns, rolls, tortillas (both corn and flour), pizza dough, bagels, and crumpets.

### Inventive Enzyme Mixture

The inventive enzyme mixture broadly comprises a first xylanase and a first lipase as well as a second xylanase different from the first xylanase and/or a second lipase different from the first lipase and/or lecithin. In preferred embodiments, the enzyme mixture comprises both the second xylanase and the second lipase and/or lecithin. In a further preferred embodiment, it also comprises a fungal amylase and/or lecithin. In a further embodiment, the enzyme mixture consists essentially of, or even consists of, the foregoing variations, optionally with a carrier.

In more detail, the first xylanase and second xylanase (when included) are preferably bacterial or fungal xylanases that act on hemicelluloses present in dough during the baking process. The preferred xylanases will have a minimum activity of from about 300 XylH/g to about 2,500 XylH/g and preferably from about 500 XylH/g to about 2,100 XylH/g. As referred to herein, "1 Xy1H" corresponds to an enzyme that releases from xylan a quantity of reducing groups equivalent to 1 µMol xylose per minute at 30°C under standard conditions using the hydrazid method.

Even more preferably, one xylanase will have a minimum activity of from about 300 Xy1H/g to about 800 XylH/g and preferably from about 500 XylH/g to about 700 XylH/g, and one xylanase will have a minimum activity of from about 1,200 XylH/g to about 2,500 Xy1H/g and preferably from about 1,500 XylH/g to about 2,100 XylH/g. If only one type of xylanase is present, then that xylanase will have an activity in one of the foregoing ranges.

In a preferred embodiment, the first and second xylanases are individually derived from an organism selected from the group consisting of *Bacillus* and *Aspergillus.* Even more preferably, the first and second xylanases are derived from an organism selected from the group consisting of *Bacillus licheniformis, Bacillus subtilis,* and *Aspergillus niger.* It will be appreciated that the first and second xylanases could be derived from the same or different organism genus, or even the same or different species, provided they are different xylanases.

The total quantity of xylanase(s) in the inventive mixture will be from about 0.2% to about 50% by weight, preferably from about 0.3% to about 30% by weight, and more preferably from about 0.4% to about 20% by weight, based upon the total weight of the enzyme mixture taken as 100% by weight. In embodiments where at least two xylanases are present, one or more xylanases are present in the inventive enzyme mixture at levels of from about 0.2% to about 3% by weight each, preferably from about 0.5% to about 2.5% by weight each, and more preferably from about 0.7% to about 2% by weight each. One or more other xylanases are included at levels of from about 0.2% to about 20.0% by weight each, preferably from about 0.3% to about 10% by weight each, and more preferably from about 0.4% to about 5% by weight each, based upon the total weight of the enzyme mixture taken as 100% by weight.

The first lipase and second lipase (when included) are preferably *Humicola* (also known as *Thermomyces*) lipases that break down fat and lipids during the baking process and convert them to glycerol and free fatty acids. The preferred lipases will have a minimum activity of from about 3 KLU/g to about 100 KLU/g, and preferably from about 6 KLU/g to about 75 KLU/g. The activity of this enzyme is measured in KLU/g. As used herein, the LU method is based on the speed at which the enzyme hydrolyses tributyrin at pH 7.0. The butyric acid formed is titrated with sodium hydroxide, and the consumption of the latter recorded as a function of time. 1 LU is the amount of enzyme, which releases 1 pmol butyric acid per minute under the given standard conditions. I KLU = 1,000 LU.

Even more preferably, one lipase will have a minimum activity of from about 3 KLU/g to about 14 KLU/g and preferably from about 5 KLU/g to about 10 KLU/g, and one lipase will have a minimum activity of from about 25 KLU/g to about 100 KLU/g and preferably from about 35 KLU/g to about 75 KLU/g. If only one type of lipase is present, then that lipase will have an activity in one of the foregoing ranges.

In a preferred embodiment, the first and second lipases are individually derived from an organism selected from the group consisting of *Humicola* and *Fusarium.* Even more preferably, the first and second lipases are derived from an organism selected from the group consisting of *Humicola lanuginosa* and *Fusarium oxysporum.* It will be appreciated that the first and second lipases could be derived from the same or different organism genus, or even the same or different species, provided they are different lipases.

The total quantity of lipase(s) in the inventive mixture will be from about 0.01% to about 50% by weight, preferably from about 0.02% to about 30% by weight, and more preferably from about 0.03% to about 20% by weight, based upon the total weight of the enzyme mixture taken as 100% by weight. In embodiments where at least two lipases are present, one or more lipases are included in the inventive enzyme mixture at levels of from about 0.01% to about 3% by weight each, preferably from about 0.02% to about 2% by weight each, and more preferably from about 0.03% to about 1% by weight each. One or more other lipases are included at levels of from about 0.3% to about 20% by weight each, preferably from about 0.4% to about 10% by weight each, and more preferably from about 0.5% to about 5% by weight each, based upon the total weight of the enzyme mixture taken as 100% by weight.

In some embodiments, the enzyme mixture further comprises a fungal amylase (preferably a fungal alpha-amylase) with any of the lipase and xylanase combinations described above. The fungal amylase will act on starch, and the preferred fungal amylase will have a minimum activity of from about 500 FAU-F/g to about 3,000 FAU-F/g and preferably from about 1,500 FAU-F/g to about 2,600 FAU-F/g. As used herein, FAU(F) Fungal alpha-amylase Units (Fungamyl) are measured relative to an enzyme standard of a declared strength. The assay substrate is 4,6-ethylidene(G7)-p-nitrophenyl(G1)-alpha, D-maltoheptaoside (ethylidene-G7-PNP). Reaction conditions: Temperature 37° C; pH 7.15; Wavelength 405 nm; Reaction time 5 min; and Measuring time 2 min.

In a preferred embodiment, the fungal amylase is derived from *Aspergillus,* and more preferably, from *Aspergillus oryzae.* In embodiments where a fungal amylase is included, the quantity of the fungal amylase in the inventive enzyme mixture will be from about 0.2% to about 20% by weight, preferably from about 0.3% to about 10% by weight, and more preferably from about 0.4% to about 5% by weight, based upon the total weight of the enzyme mixture taken as 100% by weight.

As noted previously, lecithin can be included in the enzyme mixture, in any of the various enzyme combinations described previously. When lecithin is included, it is present at levels of from about 1 to about 50% by weight, more preferably from about 5 to about 45% by weight, and even more preferably from about 10 to about 40% by weight, based upon the total weight of enzyme mixture taken as 100% by weight.

It is preferred that the inventive enzyme mixture be substantially free (i.e., comprises less than about 1% by weight, preferably less than about 0.5% by weight, and preferably about 0% by weight) of one or more of the following enzymes: cellulases, glucose oxidases, and trans-glutaminases. More preferably, the enzyme mixture is substantially free of at least two of these enzymes, and even more preferably the enzyme mixture is substantially free of all three of these enzymes.

Preferred weight ratios of the various enzymes are shown in Table A.

**Table A - Weight Ratios^{A}**

| ENZYMES | BROADEST | PREFERRED |
|---|---|---|
| Total Xylanase:Total Lipase | About 25:1 to about 1:3 | About 5:1 to about 1:1 |
| Total Xylanase:Fungal Amylase^{B} | About 50:1 to about 1:2 | About 10:1 to about 1:1 |
| Total Lipase:Fungal Amylase^{B} | About 25:1 to about 1:3 | About 5:1 to about 1:1 |

| | | |
|---|---|---|
| ^{A} Weight ratios also applicable to inventive dough. ^{B} In embodiments where a fungal amylase is present. | | |

Finally, it will be appreciated that the enzyme mixture can be provided with purely the above enzymes and/or lecithin, or it can be dispersed in a carrier powder (e.g., flour, calcium sulfate, starch, silicon dioxide) alone or with other optional ingredients that might be useful during the baking process. Examples of suitable optional ingredients include those selected from the group consisting of sodium chloride, water, sunflower oil, wheat flour, starch, and dextrin.

### Inventive Dough Ingredients

The inventive enzyme mixture will be included in the dough at levels such that the dough will include each enzyme at the activity levels set forth in Table B. Lecithin levels are also set forth in Table B.

**Table B**

| ENZYME | BROADEST | PREFERRED | MOST PREFERRED |
|---|---|---|---|
| Total Lipase (KLU/kg of flour) | from about 0.001 to about 20 | from about 0.01 to about 15 | from about 0.02 to about 10 |
| One Lipase* (KLU/kg of flour) | at least about 0.001 | from about 0.01 to about 1 | from about 0.02 to about 0.5 |
| One Lipase* (KLU/kg of flour) | from about 0.1 to about 20 | from about 0.25 to about 15 | from about 0.5 to about 10 |
| Total Xylanase (XylH/kg of flour) | from about 0.5 to about 2000 | from about 5 to about 1000 | from about 8 to about 700 |
| One Xylanase* (XylH/kg of flour) | from about 0.5 to about 100 | from about 5 to about 80 | from about 8 to about 60 |
| One Xylanase* (XylH/kg of flour) | from about 2 to about 2000 | from about 20 to about 1000 | from about 40 to about 700 |
| Fungal Amylase** (FAU-F/kg of flour) | from about 0.1 to about 1000 | from about 10 to about 300 | from about 30 to about 100 |
| Lecithin** (% based on flour) | from about 0.01 to about 10 | from about 0.1 to about 5 | from about 0.2 to about 2 |

| | | | |
|---|---|---|---|
| * In embodiments where more than one lipase and/or more than one xylanase are present. ** In embodiments where a fungal amylase and/or lecithin are present. | | | |

Typical baked product ingredients and their preferred ranges are set forth in Table C, although it will be appreciated that these are exemplary and can be adjusted depending upon the formulation of the end user.

**Table C**

| INGREDIENT | BROAD RANGE* | PREFERRED* | MOST PREFERRED* |
|---|---|---|---|
| Yeast Compressed | from about 1% to about 10% | from about 2% to about 6% | from about 3% to about 4% |
| Dough Strengthener | from about 0% to about 2% | from about 0.25% to about 1%** | from about 0.35% to about 0.5%** |
| Dry Milk | from about 0% to about 3% | from about 1% to about 2% | from about 1% to about 1.5% |
| Salt (typically NaCl) | from about 1% to about 3% | from about 1.5% to about 2.5% | from about 1.75% to about 2.25% |
| Mold Inhibitor | from about 0% to about 1% | from about 0.1 % to about 0.5% | from about 0.25% to about 0.35% |
| Oil/Fat | from about 0% to about 20% | from about 1% to about 6% | from about 2% to about 3% |
| Flour Improver | from about 0 ppm to about 500 ppm | from about 10 ppm to about 200 ppm** | from about 40 ppm to about 75 ppm** |
| Emulsifiers | from about 0% to about 4% | from about 0.5% to about 3% | from about 1% to about 2.5% |
| Water | from about 50% to about 75% | from about 55% to about 70% | from about 58% to about 65% |
| Bacterial Amylase | from about 0 to 20,000 MANU/kg flour | from about 1,000 to about 10,000 MANU/kg flour | from about 3,000 to about 5,000 MANU/kg flour |
| Other Enzymes | from about 0 ppm to about 2,000 ppm | from about 20 ppm to about 300 ppm | from about 100 ppm to about 200 ppm |

| | | | |
|---|---|---|---|
| *Percentage or ppm based upon the weight of flour. **In embodiments where still included. | | | |

In addition to the ingredients from Table C, the dough will include a source of starch, which will typically be a flour. Preferred such sources of starch include those selected from the group consisting of wheat flour, rye flour, oat flour, barley flour, triticale flour, rice flour, tapioca starch, corn starch, wheat starch, rice starch, potato starch, corn flour, and potato flour. The source of starch will typically be included to provide levels of from about 50% to about 95% by weight starch, and preferably from about 65% to about 85% by weight starch, based upon the total weight of the flour taken as 100% by weight. When flour is the source of starch, this will typically result in flour levels of from about 40% to about 70% by weight flour, and preferably from about 50% to about 60% by weight flour, based upon the total weight of the dough taken as 100% by weight.

The yeast used can be any yeast conventionally used in yeast-raised bakery products, with cream and compressed yeast being preferred. Preferred mold inhibitors include those selected from the group consisting of calcium and/or sodium propionate, potassium sorbate, vinegar, raisin juice concentrate, and mixtures thereof. The preferred oil or fat is selected from the group consisting of soy oil, partially hydrogenated soy oil, lard, palm oil, corn oil, cottonseed oil, canola oil, and mixtures thereof.

Suitable flour improvers include ascorbic acid. While any conventional emulsifier can be utilized, preferred emulsifiers include polyoxyethylene sorbitan monostearate (typically referred to as Polysorbate 60) and monoglycerides, such as powdered and hydrated monoglycerides, citrated monoglycerides, and succinylated monoglycerides.

It is preferred that the dough be substantially free (i.e., comprises less than about 0.5% by weight, preferably less than about 0.1% by weight, and preferably about 0% by weight) of one or more of the following enzymes: cellulases, glucose oxidases, and trans-glutaminases. More preferably, the dough is substantially free of at least two of these enzymes, and even more preferably the dough is substantially free of all three of these enzymes.

Furthermore, it will be appreciated that the inventive enzyme mixture allows for DATEM and other ingredients that do not allow for a "clean" label (e.g., dough conditioners such as sodium stearoyl lactylate and ethoxylated monoglyceride; flour improvers such as potassium bromate, potassium iodate, azodicarboamide, and calcium peroxide) to be substantially reduced, and even eliminated, from the dough used in the baking process. In instances where DATEM is substantially reduced, the dough will comprise less than about 0.5% by weight DATEM, preferably less than about 0.3% by weight DATEM, and more preferably from about 0.01% to about 0.2% by weight DATEM, based upon the total weight of the flour taken as 100% by weight. In instances where DATEM is eliminated, the dough will be substantially free of DATEM (i.e., comprises less than about 0.01% by weight, preferably less than about 0.005% by weight, and preferably about 0% by weight DATEM). It is preferred that the dough is also substantially free of (i.e., comprises less than about 0.005% by weight, preferably less than about 0.001% by weight, and preferably about 0% by weight) one or more (and preferably all) of the following: sodium stearoyl lactylate, ethoxylated monoglyceride, potassium bromate, potassium iodate, azodicarbonamide, and calcium peroxide.

### Method of Making Baked Products

In forming the dough according to the invention, the above ingredients can be simply mixed together in one stage using the "no-time dough process," or they can be subjected to the "sponge and dough process." In the "no-time dough process," all ingredients are added to a mixing bowl at the same time and mixed for a time period from about 5 to about 15 minutes to form the mixed dough.

In the "sponge and dough" process, part of the flour (e.g., 55-75% by weight of the total flour) is mixed with water, yeast, and preferably the dough strengthener (if utilized) and allowed to ferment for a time period of from about 3 hours to about 4 hours. This forms the "sponge." After this time period, the remaining ingredients are mixed with the sponge for a time period of from about 2 minutes to about 10 minutes to form the mixed dough. The mixed dough is preferably allowed to rest for a time period of from about 5 minutes to about 15 minutes before being formed into the desired size pieces and placed in the baking pans. The dough is then preferably allowed to proof at a temperature of from about 40°C to about 50°C at a relative humidity of from about 65% to about 95% for a time period of from about 50 minutes to about 70 minutes. After proofing, the product can then be baked using the times and temperatures necessary for the type of product being made (e.g., from about 190°C to about 220°C for about 20 minutes to about 30 minutes).

The invention results in a number of advantages in the final baked product, in addition to those discussed previously. For example, the invention allows the DATEM in the product to be substantially reduced, or even eliminated, at the levels noted previously with respect to the dough. Furthermore, even though DATEM is being reduced and/or avoided, similar volumes, textures, tastes, and cell structures are achieved. For example, the inventive method will retain at least about 80%, preferably at least about 85%, and more preferably at least about 90% of the volume that would be achieved making the same bread with only 50% or less of the amount of DATEM that would otherwise be included. Furthermore in embodiments where lecithin is included, inventive method will retain at least about 93%, preferably at least about 96%, more preferably at least about 99%, and even more preferably 100% of the volume that would be achieved making the same bread with only 50% or less of the amount of DATEM that would otherwise be included. Volume is determined as described in Example 1A.

The invention pertains in particular to the subject-matter in the following clauses, without being limited thereto or thereby. The embodiments presented in the following clauses can be combined as indicated, and can also be combined with other matter in the present description, and with the claims at the end of this document.
1. In a dough including flour and other dough-making ingredients, the improvement being that the dough further comprises:
   a first xylanase;
   a first lipase; and
   an enzyme selected from the group consisting of a second xylanase different from said first xylanase, a second lipase different from said first lipase, and both said second xylanase and second lipase, wherein said dough is substantially free of one or more of the following enzymes: cellulases, glucose oxidases, and trans-glutaminases.
2. The dough of claim 1, wherein said dough comprises both said second xylanase and said second lipase.
3. The dough of claims 1 or 2, wherein said dough is substantially free of cellulases, glucose oxidases, and trans-glutaminases.
4. The dough of any of claims 1 to 3, said dough further comprising a fungal amylase.
5. The dough of any of claims 1 to 4, wherein said first xylanase is derived from an organism selected from the group consisting of *Bacillus* and *Aspergillus.*
6. The dough of any of claims 1 to 5, wherein said first xylanase is derived from an organism selected from the group consisting of *Bacillus licheniformis, Bacillus subtilis,* and *Aspergillus niger.*
7. The dough of any of claims 1 to 6, wherein said second xylanase is derived from an organism selected from the group consisting of *Bacillus* and *Aspergillus.*
8. The dough of any of claims 1 to 7, wherein said second xylanase is derived from an organism selected from the group consisting of *Bacillus licheniformis, Bacillus subtilis,* and *Aspergillus niger.*
9. The dough of any of claims 1 to 8, wherein each of said first and second lipases is individually derived from an organism selected from the group consisting of *Humicola* and *Fusarium.*
10. The dough of any of claims 1 to 9, wherein each of said first and second lipases is individually derived from an organism selected from the group consisting of *Humicola lanuginosa* and *Fusarium oxysporum.*
11. The dough of any of claims 1 to 10, wherein said dough comprises less than about 0.5% by weight DATEM, based upon the total weight of the dough taken as 100% by weight.
12. The dough of any of claims 1 to 10, wherein said dough comprises about 0% by weight DATEM, based upon the total weight of the dough taken as 100% by weight.
13. The dough of any of claims 1 to 12, wherein at least one lipase is present in said dough at levels of at least about 0.001 KLU/kg of flour.
14. The dough of any of claims 1 to 13, wherein at least one lipase is present in said dough at levels of from about 0.1 to about 20 KLU/kg of flour.
15. The dough of any of claims 1 to 14, wherein at least one xylanase is present in said dough at levels of from about 0.5 to about 100 XylH/kg of flour.
16. The dough of any of claims 1 to 15, wherein at least one xylanase is present in said dough at levels of from about 2 to about 2,000 XylH/kg of flour.
17. The dough of any of claims 1 to 16, said dough further comprising lecithin.
18. The dough of any of claims 1 to 17, wherein said dough further comprises yeast and water.
19. The dough of any of claims 1 to 18, wherein said dough is a dough of a bakery product selected from the group consisting of bread, English muffins, pretzels, buns, rolls, tortillas, pizza dough, bagels, and crumpets.
20. A method of forming a bakery product, said method comprising:
   providing a dough comprising:
      flour;
      a first xylanase;
      a first lipase; and
      an enzyme selected from the group consisting of a second xylanase different from said first xylanase, a second lipase different from said first lipase, and both said second xylanase and second lipase, wherein said dough is substantially free of one or more of the following enzymes:
         cellulases, glucose oxidases, and trans-glutaminases; and
   baking the dough for a time and temperature sufficient to yield the bakery product.
21. The method of claim 20, wherein said dough comprises both said second xylanase and said second lipase.
22. The method of claims 20 or 21, wherein said dough is substantially free of cellulases, glucose oxidases, and trans-glutaminases.
23. The method of any of claims 20 to 22, said dough further comprising a fungal amylase.
24. The method of any of claims 20 to 23, wherein said first xylanase is derived from an organism selected from the group consisting of *Bacillus* and *Aspergillus.*
25. The method of any of claims 20 to 24, wherein said first xylanase is derived from an organism selected from the group consisting of *Bacillus licheniformis, Bacillus subtilis,* and *Aspergillus niger.*
26. The method of any of claims 20 to 25, wherein said second xylanase is derived from an organism selected from the group consisting of *Bacillus* and *Aspergillus.*
27. The method of any of claims 20 to 26, wherein said second xylanase is derived from an organism selected from the group consisting of *Bacillus licheniformis, Bacillus subtilis,* and *Aspergillus niger.*
28. The method of any of claims 20 to 27, wherein each of said first and second lipases is individually derived from an organism selected from the group consisting of *Humicola* and *Fusarium.*
29. The method of any of claims 20 to 28, wherein each of said first and second lipases is individually derived from an organism selected from the group consisting of *Humicola lanuginosa* and *Fusarium oxysporum.*
30. The method of any of claims 20 to 29, wherein said dough comprises less than about 0.5% by weight DATEM, based upon the total weight of the dough taken as 100% by weight.
31. The method of any of claims 20 to 30, wherein said dough comprises about 0% by weight DATEM, based upon the total weight of the dough taken as 100% by weight.
32. The method of any of claims 20 to 31, wherein at least one lipase is present in said dough at levels of at least about 0.001 KLU/kg of flour.
33. The method of any of claims 20 to 32, wherein at least one lipase is present in said dough at levels of from about 0.1 to about 20 KLU/kg of flour.
34. The method of any of claims 20 to 33, wherein at least one xylanase is present in said dough at levels of from about 0.5 to about 100 XylH/kg of flour.
35. The method of any of claims 20 to 34, wherein at least one xylanase is present in said dough at levels of from about 2 to about 2,000 XylH/kg of flour.
36. The method of any of claims 20 to 35, said dough further comprising lecithin.
37. The method of any of claims 20 to 36, wherein said dough further comprises yeast and water.
38. The method of any of claims 20 to 37, wherein said bakery product is selected from the group consisting of bread, English muffins, pretzels, buns, rolls, tortillas, pizza dough, bagels, and crumpets.
39. An enzyme mixture useful for preparing baked products, said mixture comprising:
   a first xylanase;
   a first lipase; and
   an enzyme selected from the group consisting of a second xylanase different from said first xylanase, a second lipase different from said first lipase, and both said second xylanase and second lipase, wherein said mixture is substantially free of one or more of the following enzymes: cellulases, glucose oxidases, and trans-glutaminases.
40. The enzyme mixture of claim 39, wherein said enzyme mixture comprises both said second xylanase and said second lipase.
41. The enzyme mixture of claims 39 or 40, wherein said enzyme mixture is substantially free of cellulases, glucose oxidases, and trans-glutaminases.
42. The enzyme mixture of any of claims 39 to 41, said enzyme mixture further comprising a fungal amylase.
43. The enzyme mixture of any of claims 39 to 42, wherein said first xylanase is derived from an organism selected from the group consisting of *Bacillus* and *Aspergillus.*
44. The enzyme mixture of any of claims 39 to 43, wherein said first xylanase is derived from an organism selected from the group consisting of *Bacillus licheniformis, Bacillus subtilis,* and *Aspergillus niger.*
45. The enzyme mixture of any of claims 39 to 44, wherein said second xylanase is derived from an organism selected from the group consisting of *Bacillus* and *Aspergillus.*
46. The enzyme mixture of any of claims 39 to 45, wherein said second xylanase is derived from an organism selected from the group consisting of *Bacillus licheniformis, Bacillus subtilis,* and *Aspergillus niger.*
47. The enzyme mixture of any of claims 39 to 46, wherein each of said first and second lipases is individually derived from an organism selected from the group consisting of *Humicola* and *Fusarium.*
48. The enzyme mixture of any of claims 39 to 47, wherein each of said first and second lipases is individually derived from an organism selected from the group consisting of *Humicola lanuginosa* and *Fusarium oxysporum.*
49. The enzyme mixture of any of claims 39 to 48, wherein at least one lipase is present in said enzyme mixture at levels of from about 0.01% to about 3% by weight, based upon the total weight of the enzyme mixture taken as 100% by weight.
50. The enzyme mixture of any of claims 39 to 49, wherein at least one lipase is present in said enzyme mixture at levels of from about 0.3% to about 20% by weight, based upon the total weight of the enzyme mixture taken as 100% by weight.
51. The enzyme mixture of any of claims 39 to 50, wherein at least one xylanase is present in said enzyme mixture at levels of from about 0.2% to about 3% by weight, based upon the total weight of the enzyme mixture taken as 100% by weight.
52. The enzyme mixture of any of claims 39 to 51, wherein at least one xylanase is present in said enzyme mixture at levels of from about 0.2% to about 20% by weight, based upon the total weight of the enzyme mixture taken as 100% by weight.
53. The enzyme mixture of any of claims 39 to 52, said dough further comprising lecithin.
54. The enzyme mixture of any of claims 39 to 53, wherein said enzyme mixture further comprises a carrier powder.
55. In a dough including flour and other dough-making ingredients, the improvement being that the dough further comprises:
   a first xylanase;
   a first lipase; and
   lecithin.
56. The dough of claim 55, further comprising an enzyme selected from the group consisting of a second xylanase different from said first xylanase, a second lipase different from said first lipase, and both said second xylanase and second lipase.
57. The dough of claim 56, said dough comprising both said second xylanase and second lipase.
58. A method of forming a bakery product, said method comprising:
   providing a dough comprising:
      flour;
      a first xylanase;
      a first lipase; and
      lecithin; and
   baking the dough for a time and temperature sufficient to yield the bakery product.
59. The method of claim 58, said dough further comprising an enzyme selected from the group consisting of a second xylanase different from said first xylanase, a second lipase different from said first lipase, and both said second xylanase and second lipase.
60. The method of claim 56, said dough both said second xylanase and second lipase.
61. An enzyme mixture useful for preparing baked products, said mixture comprising:
   a first xylanase;
   a first lipase; and
   lecithin.
62. The enzyme mixture of claim 61, said enzyme mixture further comprising an enzyme selected from the group consisting of a second xylanase different from said first xylanase, a second lipase different from said first lipase, and both said second xylanase and second lipase.
63. The enzyme mixture of claim 62, said enzyme mixture comprising both said second xylanase and second lipase.
64. The enzyme mixture of any of claims 61 to 63, said enzyme mixture further comprising a carrier powder.

### EXAMPLES

The following examples set forth preferred methods in accordance with the invention. It is to be understood, however, that these examples are provided by way of illustration and nothing therein should be taken as a limitation upon the overall scope of the invention.

### EXAMPLE 1A

### Xylanase Testing

In this procedure, the performance of varying quantities of Veron 191 (a xylanase, obtained from specific cultures of *Aspergillus niger,* and available from AB Enzymes) was tested in a 100% whole wheat bread formulation and compared against that of DATEM. The formulation and variations tested are shown in Tables 1 and 2.

**TABLE 1**

| 100% Whole Wheat Bread Formula | |
|---|---|
| Ingredients | % of Flour Weight |
| Whole Wheat Flour | 100 |
| Vital Wheat Gluten | 4 |
| Granulated Sugar | 10 |
| Salt | 2 |
| Calcium Propionate | 0.25 |
| Ascorbic Acid | 0.012 |
| Soy Oil | 2 |
| Yeast-Dry | 2 |
| Water | 70 |

**TABLE 2**

| Formula Variations | | | | | | | | |
|---|---|---|---|---|---|---|---|---|
| Dough # | 1 | 2 | 3 | 4 | 5 | 6 | 7 | 8 |
| | | | | | | | | |
| Veron 191 (XylH/kg flour) | 0 | 0 | 42.5 | 85 | 170 | 255 | 340 | 425 |
| Fungamyl 2500 (FAU-F/kg flour)^{A} | 50 | 50 | 50 | 50 | 50 | 50 | 50 | 50 |
| Lipopan F Conc (KLU/ kg flour)^{B} | 0.4 | 0 | 0.4 | 0.4 | 0.4 | 0.4 | 0.4 | 0.4 |
| BXP 25001 (NBXP/kg flour)^{C} | 0 | 250 | 0 | 0 | 0 | 0 | 0 | 0 |
| DATEM (% based on flour) | 0 | 0.5 | 0 | 0 | 0 | 0 | 0 | 0 |

| | | | | | | | | |
|---|---|---|---|---|---|---|---|---|
| ^{A} Fungamyl 2500 is a fungyl alpha-amylase derived from *Bacillus subtilis* and available from Novozymes. ^{B} Lipopan F Conc is a *Fusarium* lipase expressed by submerged fermentation in a genetically modified *Aspergillus oryzae* organism. Available from Novozymes. ^{C} BXP 25001 is a xylanase derived from *Bacillus subtilis,* available from DSM. (DSM determines xylanase activity differently than the definition being used herein. It's defined on 1% wheat arabinoxylan at pH 6.0, T= 30°C, and an incubation time of 30 min. The xylose reducing residues are measured with a reducing sugar assay. One NBXU is defined as the amount of enzyme that can produce 0.5 mg of xylose reducing residues in the incubation mixture under the assay conditions.) | | | | | | | | |

The ingredients were added to a Hobart mixer, and mixed until optimal development. The mixer bowl was chilled by circulating 20°C chilling water through the cooling jackets of the mixing bowl. After mixing, the dough was allowed to rest on a wood bench for 10 minutes and then, divided, sheeted, and moulded according to the processing parameters shown in Table 3.

**TABLE 3**

| Processing Parameters | |
|---|---|
| Mixing Time | To development |
| Floor Time | 10 minutes |
| Scaling Weight | 560 g |
| Pan Size (inches) | 10.25 x 4.63 x 3.0 |
| Molding Type | Straight |
| Proof Condition | 104F/78% RH |
| Proof Time | To height-1.7 cm above top of pan |
| Baking Temp | 420F |
| Baking Time | 20 min |
| Bag Time | 65 min |

The moulded dough pieces were then placed into loaf pans and proofed to the targeted height for around 55-60 min. Each prepared dough was divided into two aliquots, one that was "shocked" and one that was not (referred to as "unshocked"). A dough is shocked by placing it (after proofing, while it's still in its pan) on two wooden blocks that are 8.5 inches apart and dropping it (pan and all) from a height of 3.375 inches (height of the wooden blocks). This allows the dough's ability to recover to be tested. Each dough (both shocked and unshocked) was then baked to form a bread. After baking, the loaves were left on a metal shelf for cooling for 60 minutes and then packed individually in plastic bags.

The volume of each sample was then determined by a benchtop laser-based scanner called a VolScan Profiler (by Stable Micro Systems), which is a non-contact measurement system that measures product volume and provides a rapid, 3-dimensional digitization of products. Vertical step was run at 4 mm, and Rotation Speed was set to Standard (1rps). The results are shown in Table 4. It was found that the Veron 191 assisted in obtaining some of the volume properties achieved with DATEM, but without including DATEM. Furthermore, when the Veron 191 samples were sliced and visually observed, they were noted to have similar cell structure and texture to the DATEM samples.

**TABLE 4**

| Dough # | 1 | 2 | 3 | 4 | 5 | 6 | 7 | 8 |
|---|---|---|---|---|---|---|---|---|
| Avg. Unshocked Volume (ml) | 2117.8 | 2271.2 | 2115.9 | 2040.3 | 2266.1 | 2232.2 | 2158.8 | 2260.3 |
| Avg. Shocked Volume (ml) | 2002.3 | 2158.7 | 2007.1 | 1963.4 | 2085.6 | 2102.1 | 2062.75 | 2157.3 |

### EXAMPLE 1B

### Xylanase Testing

In this procedure, the performance of varying quantities of Veron 568 (a xylanase obtained from specific cultures of *Bacillus subtilis,* and available from AB Enzymes) was tested in a 100% whole wheat bread formulation and compared against that of DATEM. The formulation and variations tested are shown in Tables 5 and 6.

**TABLE 5**

| 100% Whole Wheat Bread Formula | |
|---|---|
| Ingredients | % of Flour Weight |
| Whole Wheat Flour | 100 |
| Vital Wheat Gluten | 4 |
| Granulated Sugar | 10 |
| Salt | 2 |
| Calcium Propionate | 0.25 |
| Ascorbic Acid | 0.012 |
| Soy Oil | 2 |
| Yeast-Dry | 2 |
| Water | 70 |

**TABLE 6**

| Formula Variations | | | | | | | | |
|---|---|---|---|---|---|---|---|---|
| Dough # | 1 | 2 | 3 | 4 | 5 | 6 | 7 | 8 |
| | | | | | | | | |
| Veron 568 (XylH/kg flour) | 0 | 0 | 11.36 | 22.72 | 34.08 | 45.44 | 56.8 | 85.2 |
| Fungamyl 2500 (FAU-F/kg flour)^{A} | 50 | 50 | 50 | 50 | 50 | 50 | 50 | 50 |
| Lipopan F Conc (KLU/ kg flour)^{B} | 0.4 | 0 | 0.4 | 0.4 | 0.4 | 0.4 | 0.4 | 0.4 |
| BXP 25001 (NBXP/kg flour)^{C} | 0 | 250 | 0 | 0 | 0 | 0 | 0 | 0 |
| DATEM (% based on flour) | 0 | 0.5 | 0 | 0 | 0 | 0 | 0 | 0 |

The above formulation was prepared according to the same processing parameters described in Example 1A. Again, each prepared dough was divided into two aliquots, one that was "shocked" and one that was not (referred to as "unshocked"). Each dough (both shocked and unshocked) was then baked to form a bread.

The volume of each sample was then determined following the procedure described in Example 1A. The results are shown in Table 7. It was found that the Veron 568 assisted in obtaining some of the volume properties achieved with DATEM, but without including DATEM. Furthermore, when the Veron 568 samples were sliced and visually observed, they were noted to have similar cell structure and texture to the DATEM samples.

**TABLE 7**

| Dough # | 1 | 2 | 3 | 4 | 5 | 6 | 7 | 8 |
|---|---|---|---|---|---|---|---|---|
| Avg. Unshocked Volume (ml) | 2129.5 | 2350.5 | 2073.1 | 2180.7 | 2217.7 | 2116.5 | 2163.6 | 2116.8 |
| Avg. Shocked Volume (ml) | 1787.8 | 2227.5 | 1953.1 | 2103.0 | 2052.6 | 2050.1 | 2068.4 | 1974.4 |

### EXAMPLE 2A

### Lipase Testing

In this procedure, the performance of varying quantities of Lipopan 50 BG (a lipase derived from *Aspergillus oryzae,* and available from Novozymes) was tested in a 100% whole wheat bread formulation. The formulation and variations tested are shown in Tables 8 and 9. It may be noted that from here on out Novamyl Pro (a Novamyl variant from Novozymes®) was used during testing as a standard shelf-life extending system in order to further represent a typical industrial formula.

**TABLE 8**

| 100% Whole Wheat Bread Formula | |
|---|---|
| Ingredients | % of Flour Weight |
| Whole Wheat Flour | 100 |
| Vital Wheat Gluten | 4 |
| Granulated Sugar | 10 |
| Salt | 2 |
| Calcium Propionate | 0.25 |
| Ascorbic Acid | 0.012 |
| Soy Oil | 2 |
| Yeast-Dry | 2 |
| Water | 70 |

**TABLE 9**

| Formula Variations | | | | |
|---|---|---|---|---|
| Dough # | 1 | 2 | 3 | 4 |
| Lipopan 50 BG (KLU/kg flour) | 0.0 | 0.5 | 1.0 | 2.0 |
| Veron 568 (XylH/kg flour) | 17.04 | 17.04 | 17.04 | 17.04 |
| Veron 191 (XylH/kg flour) | 85 | 85 | 85 | 85 |
| Fungamyl 2500 (FAU-F/kg flour) | 50 | 50 | 50 | 50 |
| Novamyl Pro (PROMU/kg flour) | 6.65 | 6.65 | 6.65 | 6.65 |

The above formulation was prepared according to the same processing parameters described in Example 1A. Again, each prepared dough was divided into two aliquots, one that was "shocked" and one that was not (referred to as "unshocked"). Each dough (both shocked and unshocked) was then baked to form a bread.

The respective volumes of each sample was then determined as described previously and are shown in Table 10. It was found that the Lipopan 50 BG assisted in obtaining some of the volume properties similar to DATEM, but without including DATEM. Furthermore, when the Lipopan 50 BG samples were sliced and visually observed, they were noted to have similar cell structure and texture to the DATEM samples.

**TABLE 10**

| Dough # | 1 | 2 | 3 | 4 |
|---|---|---|---|---|
| Avg Unshocked Volume (ml) | 2180.1 | 2148.7 | 2188.8 | 2289.8 |
| Avg Shocked Volume (ml) | 2017.4 | 2034.3 | 2084.6 | 2151.7 |

### EXAMPLE 2B

### Lipase Testing

In this procedure, the performance of varying quantities of Lipopan Xtra BG (a lipase derived from *Aspergillus oryzae,* and available from Novozymes) was tested in a 100% whole wheat bread formulation and compared against that of DATEM. The formulation and variations tested are shown in Tables 11 and 12.

**TABLE 11**

| 100% Whole Wheat Bread Formula | |
|---|---|
| Ingredients | % of Flour Weight |
| Whole Wheat Flour | 100 |
| Vital Wheat Gluten | 4 |
| Granulated Sugar | 10 |
| Salt | 2 |
| Calcium Propionate | 0.25 |
| Ascorbic Acid | 0.012 |
| Soy Oil | 2 |
| Yeast-Dry | 2 |
| Water | 70 |

**TABLE 12**

| Formula Variations | | | | | | | | | |
|---|---|---|---|---|---|---|---|---|---|
| Dough # | 1 | 2 | 3 | 4 | 5 | 6 | 7 | 8 | 9 |
| Lipopan Xtra BG (KLU/kg flour) | 0 | 0 | 0.072 | 0.144 | 0.216 | 0.288 | 0.36 | 0.54 | 0.72 |
| Veron 568 (XylH/kg flour) | 0 | 17.04 | 17.04 | 17.04 | 17.04 | 17.04 | 17.04 | 17.04 | 17.04 |
| Veron 191 (XylH/kg flour) | 0 | 85 | 85 | 85 | 85 | 85 | 85 | 85 | 85 |
| Fungamyl 2500 (FAU-F/kg flour) | 50 | 50 | 50 | 50 | 50 | 50 | 50 | 50 | 50 |
| Novamyl Pro (PROMU/kg flour) | 6.65 | 6.65 | 6.65 | 6.65 | 6.65 | 6.65 | 6.65 | 6.65 | 6.65 |
| DATEM (% Based on flour) | 0.5 | 0 | 0 | 0 | 0 | 0 | 0 | 0 | 0 |
| BXP 25001 (NBXP/kg flour) | 250 | 0 | 0 | 0 | 0 | 0 | 0 | 0 | 0 |

The above formulation was prepared according to the same processing parameters described in Example 1A. Again, each prepared dough was divided into two aliquots, one that was "shocked" and one that was not (referred to as "unshocked"). Each dough (both shocked and unshocked) was then baked to form a bread.

The respective volumes of each sample were then determined as described previously and are shown in Table 13. It was found that the Lipopan Xtra BG assisted in obtaining some of the volume properties achieved with DATEM, but without including DATEM. Furthermore, when the Lipopan Xtra BG samples were sliced and visually observed, they were noted to have similar cell structure and texture to the DATEM samples.

**TABLE 13**

| Dough # | 1 | 2 | 3 | 4 | 5 | 6 | 7 | 8 | 9 |
|---|---|---|---|---|---|---|---|---|---|
| Avg Unshocked Volume (ml) | 2304.8 | 2008.3 | 2100.7 | 1990.8 | 2177.6 | 2139.6 | 2184.4 | 2258.3 | 2046.3 |
| Avg Shocked Volume (ml) | 2179 | 1943.1 | 1882.2 | 1808.8 | 1938.2 | 1743.2 | 1728.1 | 2069.8 | 1912.6 |

### EXAMPLE 3

### Inventive Enzyme Mixture Testing

In this procedure, the performance of a mixture of the two lipases and two xylanases tested in Examples 1A, 1B, 2A, and 2B along with a fungal amylase was tested in a 100% whole wheat bread formulation and compared against that of DATEM. The formulation and variations tested are shown in Tables 14 and 15.

**TABLE 14**

| 100% Whole Wheat Bread Formula | |
|---|---|
| Ingredients | % of Flour Weight |
| Whole Wheat Flour | 100 |
| Vital Wheat Gluten | 4 |
| Granulated Sugar | 10 |
| Salt | 2 |
| Calcium Propionate | 0.25 |
| Ascorbic Acid | 0.012 |
| Soy Oil | 2 |
| Yeast-Dry | 2 |
| Water | 70 |

**TABLE 15**

| Formula Variations | | | |
|---|---|---|---|
| Dough # | 1 | 2 | 3 |
| Lipopan Xtra BG (KLU/kg flour) | 0.00 | 0.00 | 0.04 |
| Lipopan 50 BG (KLU/kg flour) | 0.00 | 0.00 | 2.00 |
| Veron 568 (XylH/kg flour) | 0.00 | 17.04 | 17.04 |
| Veron 191 (XylH/kg flour) | 0.00 | 85.00 | 85.00 |
| Fungamyl 2500 (FAU-F/kg flour) | 50.00 | 50.00 | 50.00 |
| Novamyl Pro (PROMU/kg flour) | 6.65 | 6.65 | 6.65 |
| DATEM (% Based on flour) | 0.50 | 0.00 | 0.00 |
| BXP 25001 (NBXP/kg flour) | 250.00 | 0.00 | 0.00 |

The above formulation was prepared according to the same processing parameters described in Example 1A. Again, each prepared dough was divided into two aliquots, one that was "shocked" and one that was not (referred to as "unshocked"). Each dough (both shocked and unshocked) was then baked to form a bread.

The respective volumes of each sample were then determined as described previously and are shown in Table 16. It was found that the inventive enzyme mixture assisted in obtaining some of the volume properties achieved with DATEM, but without including DATEM. Furthermore, when the samples prepared with the inventive enzyme mixture were sliced and visually observed, they were noted to have similar cell structure and texture to the DATEM samples.

**TABLE 16**

| Dough # | 1 | 2 | 3 |
|---|---|---|---|
| Avg Unshocked Volume (ml) | 2487.0 | 2192.1 | 2189.8 |
| Avg Shocked Volume (ml) | 2379.3 | 2111.1 | 2156.6 |

### EXAMPLE 4A

### Lecithin in Combination with Inventive Enzyme Mixture

In this procedure, the performance of an enzyme mixture similar to that of Example 3 along with lecithin (specifically, sunflower lecithin powder, obtained from Caldic) was tested in a 100% whole wheat bread formulation and compared against that of the enzyme mixture without lecithin present. The formulation and variations tested are shown in Tables 17 and 18.

**TABLE 17**

| 100% Whole Wheat Bread Formula | |
|---|---|
| Ingredients | % of Flour Weight |
| Whole Wheat Flour | 100 |
| Vital Wheat Gluten | 4 |
| Granulated Sugar | 10 |
| Salt | 2 |
| Calcium Propionate | 0.25 |
| Ascorbic Acid | 0.012 |
| Soy Oil | 2 |
| Yeast-Dry | 2 |
| Water | 70 |

**TABLE 18**

| Formula Variations | | | |
|---|---|---|---|
| Dough # | 1 | 2 | 3 |
| Lipopan Xtra BG (KLU/kg flour) | 0.04 | 0.04 | 0.04 |
| Lipopan 50 BG (KLU/kg flour) | 2.00 | 2.00 | 2.00 |
| Veron 568 (XylH/kg flour) | 17.04 | 17.04 | 17.04 |
| Veron 191 (XylH/kg flour) | 85.00 | 85.00 | 85.00 |
| Fungamyl 2500 (FAU-F/kg flour) | 50.00 | 50.00 | 50.00 |
| Novamyl Pro (PROMU/kg flour) | 6.65 | 6.65 | 6.65 |
| Sunflower Lecithin Powder (% based on flour) | 0.00 | 0.30 | 0.60 |

The above formulation was prepared according to the same processing parameters described in Example 1A. Again, each prepared dough was divided into two aliquots, one that was "shocked" and one that was not (referred to as "unshocked"). Each dough (both shocked and unshocked) was then baked to form a bread.

The respective volumes of each sample were then determined as described previously and are shown in Table 19. It was found that using lecithin with the inventive enzyme mixture assisted in obtaining even further improved volume. Furthermore, when the samples prepared with the inventive enzyme mixture were sliced and visually observed, they were noted to have desirable cell structure and textures.

**TABLE 19**

| Dough # | 1 | 2 | 3 |
|---|---|---|---|
| Avg Unshocked Volume (ml) | 2139.7 | 2263.2 | 2274.3 |
| Avg Shocked Volume (ml) | 2086.4 | 2129.1 | 2136.2 |

### EXAMPLE 4B

### Lecithin in Combination with Inventive Enzyme Mixture

In this procedure, an enzyme mixture along with lecithin (similar to that of Example 4A) was tested in a 100% whole wheat bread formulation and compared against that of DATEM. The formulation and variations tested are shown in Tables 20 and 21. For the final testing, Novamyl Pro was eliminated and Ultra Fresh Premium 250 (shelf-life extending enzyme mixture; available from Corbion) to test performance in the presence of other enzymes typically used in the baking industry.

**TABLE 20**

| 100% Whole Wheat Bread Formula | |
|---|---|
| Ingredients | % of Flour Weight |
| Whole Wheat Flour | 100 |
| Vital Wheat Gluten | 4 |
| Granulated Sugar | 10 |
| Salt | 2 |
| Calcium Propionate | 0.25 |
| Ascorbic Acid | 0.012 |
| Ultra Fresh 250 | 0.25 |
| Soy Oil | 2 |
| Yeast-Dry | 2 |
| Water | 70 |

**TABLE 21**

| Formula Variations | | | |
|---|---|---|---|
| Dough # | 1 | 2 | 3 |
| Lipopan Xtra BG (KLU/kg flour) | 0.00 | 0.04 | 0.04 |
| Lipopan 50 BG (KLU/kg flour) | 0.00 | 2.00 | 2.00 |
| Veron 568 (XylH/kg flour) | 0.00 | 17.04 | 17.04 |
| Veron 191 (XylH/kg flour) | 0.00 | 85.00 | 85.00 |
| Fungamyl 2500 (FAU-F/kg flour) | 50.00 | 50.00 | 50.00 |
| Sunflower Lecithin Powder (% based on flour) | 0.00 | 0.00 | 0.60 |
| DATEM (% Based on flour) | 0.50 | 0.00 | 0.00 |
| BXP 25001 (NBXP/kg flour) | 250.00 | 0.00 | 0.00 |

The above formulation was prepared according to the same processing parameters described in Example 1A. Again, each prepared dough was divided into two aliquots, one that was "shocked" and one that was not (referred to as "unshocked"). Each dough (both shocked and unshocked) was then baked to form a bread.

The respective volumes of each sample were then determined as described previously and are shown in Table 22. It was found that using lecithin with the inventive enzyme mixture assisted in obtaining volume properties comparable to that of DATEM. Furthermore, when the samples prepared with the inventive enzyme mixture and lecithin were sliced and visually observed, they were noted to have similar cell structure and texture to the DATEM samples.

**TABLE 22**

| Dough # | 1 | 2 | 3 |
|---|---|---|---|
| | DATEM | Inventive Enzyme Mixture | Inventive Enzyme Mixture with Lecithin |
| Avg Unshocked Volume (ml) | 2365.0 | 2169.6 | 2353.4 |
| Avg Shocked Volume (ml) | 2168.1 | 2029.1 | 2155.1 |

## Claims

1. A dough including flour and other dough-making ingredients, the improvement being that the dough further comprises:
a first xylanase;
a first lipase; and
lecithin.

2. The dough of claim 1, where one of the dough-making ingredients is flour, and said lecithin is present in said dough at a level of from about 0.01% to about 10% by weight, based on the total weight of flour.

3. The dough of claim 1 or 2, wherein the weight ratio of total xylanase to total lipase in the dough is from about 25:1 to about 1:3.

4. The dough of any of claims 1 to 3, wherein one of the dough-making ingredients is flour, and further comprising a second lipase different from said first lipase, the first and second lipases being present at levels of at least about 0.001 KLU/kg of flour.

5. The dough of claim 4, wherein the other of the first and second lipases is present at levels of from about 0.1 to about 20 KLU/kg of flour.

6. A method of forming a bakery product, said method comprising:
providing a dough comprising:
flour;
a first xylanase;
a first lipase; and
lecithin; and
baking the dough for a time and temperature sufficient to yield the bakery product.

7. The method of claim 6, said dough further comprising a second xylanase different from said first xylanase, wherein one of the first and second xylanases is present in the dough at levels of from about 0.5 to about 100 XylH/kg of flour.

8. The method of claim 7, wherein the other of the first and second xylanases is present in the dough at levels of from about 2 to about 2000 XylH/kg of flour.

9. The method of any of claims 6 to 8, where the total lipase level in the dough is from about 0.001 to about 20 KLU/kg of flour, and the total xylanase level in the dough is from about 0.5 to about 2000 XylH/kg of flour.

10. The method of any of claims 6 to 9, said dough further comprising a fungal amylase present at levels of from about 0.1 to about 1000 FAU-F/kg of flour.

11. An enzyme mixture useful for preparing baked products, said mixture comprising:
a first xylanase;
a first lipase; and
lecithin.

12. The enzyme mixture of claim 11, wherein said lecithin is present at levels of from about 1 to about 50% by weight, based upon the total weight of enzyme mixture taken as 100% by weight.

13. The enzyme mixture of claim 11 or 12, further comprising a fungal amylase.

14. The enzyme mixture of any of claims 11 to 13, wherein the weight ratio of total xylanase to fungal amylase is from about 50:1 to about 1:2.

15. The enzyme mixture of any of claims 11 to 14, wherein the weight ratio of total lipase to fungal amylase is from about 25:1 to about 1:3.
